# EUROPÄISCHE PATENTSCHRIFT

(11) **EP 1 986 937 B1**
(45) Veröffentlichungstag und Bekanntmachung des Hinweises auf die Patenterteilung: **02.06.2010**
(21) Anmeldenummer: 07703434.6
(22) Anmeldetag: 13.02.2007
(51) Int. Cl.: B65G 1/137, B65G 69/16

(54) **VERFAHREN UND ZENTRALBANDAUTOMAT ZUM BEFÜLLEN EINES AUFTRAGSBEHÄLTERS IN EINEM KOMMISSIONIERSYSTEM**
METHOD OF, AND CENTRAL-BELT MACHINE FOR, FILLING AN ORDER CONTAINER IN AN ORDER-PICKING SYSTEM
PROCEDE ET AUTOMATE A BANDE CENTRALE POUR LE REMPLISSAGE DE RECIPIENTS DE TRANSPORT DANS UN SYSTEME D'EXPEDITION DE COMANDES

(30) Priorität: 17.02.2006 DE 102006007364
(43) Veröffentlichungstag der Anmeldung: 05.11.2008
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2007/001237
(87) Internationale Veröffentlichungsnummer: WO 2007/093383

(56) Entgegenhaltungen:
- WO-A-2006/084750
- DE-U1- 8 907 478
- DE-U1-202006 002 506
- US-A- 5 478 183

## Beschreibung

Die Erfindung betrifft ein Verfahren und einen Zentralbandautomaten zum Befüllen eines Auftragsbehälters mit einem Zentralband, welches längs eines virtuellen Fensters eines Kommissionierauftrags mit Kommissioniergut bestückt wird, wobei das Kommissioniergut an einem Befüllpunkt am vorderen Längsende des Zentralbandes dem Auftragsbehälter abgegeben wird.

Das vordere Längsende des Zentralbandes ist hierbei dasjenige Längsende des Zentralbandes, welches in Lauf- oder Förderrichtung des Zentralbandes das auf dem Laufband geförderte Kommissioniergut in den positionierten Auftragbehälter auswirft. Entsprechend versteht man unter dem hinteren Längsende des Zentralbandes das andere Längsende des Zentralbandes.

Nach dem Stand der Technik kennt man in einem Kommissioniersystem Zentralbandautomaten der vorgenannten Art, bei welchen ein virtuelles Fenster am Förder- oder Zentralband allociert bzw. eingerichtet wird. In dieses Fenster werden die Produkte, welche entlang des Zentralbands in Kommissionierregalen angeordnet sind, von verschiedenen Arten von Auswerfern geworfen. An einem Befüllpunkt werden die in das Fenster geworfenen Produkte an einen Auftragsbehälter übergeben. Die Länge eines Zentralbandes bestimmt die Anzahl der Produkte, die an bevorzugt beiden Seiten der Zentralbandes in Vertikalschächten der Kommissionierregale angeordnet sind. Dies gilt unabhängig vom Auswerfer-Typ. Gegenwärtig werden Zentralbandautomaten mit Zentralbändern bis ca. 100m gebaut. Die Gebäudeabmessungen oder die technischen Grenzen erlauben oft keine Verlängerung des Zentralbandes.

Sollen jedoch mehr Produkte automatisch kommissioniert werden, als auf einem Zentralband Platz finden, so muß ein zweiter Zentralbandautomat gebaut werden, welcher parallel und in einem Abstand zum ersten Zentralbandautomat bevorzugt in gleicher Höhe verläuft. Die Auftragsbehälter passieren dann die Befüllpunkte beider Automaten. Die Verbindung zwischen den Automaten wird durch Einrichtung einer beliebigen Fördertechnik realisiert, vorzugsweise durch ein angetriebenes Querförderband.

Von Nachteil bei dieser Variante ist, daß aufgrund der beiden Befüllpunkte eine aufwändige energieverbrauchende Querfördertechnik und zumindest zwei Steuerungssysteme benötigt werden. Befinden sich die Zentralbänder beider Zentralbandautomaten nicht in gleicher Höhe, verbrauchen dann benötigte Steigbänder der Querfördertechnik viel Platz. Die Kommissionierwege sind lang. Entsprechend lang ist auch die Kommissionierzeit.

In der DE 89 07 478 U1 werden ein Verfahren zum befüllen eines Auftragsbehälters nach dem Oberbegriff des Anspruchs 1 und ein Zentralautomat nach dem Oberbegriff des Anspruchs 11 offenbart.

Aufgabe der Erfindung ist die Schaffung eines Verfahrens zum Befüllen eines Auftragsbehälters in einem Zentralbandautomaten der eingangs genannten Art, der bei einfachem und kompakten Aufbau zuverlässig, schnell und effektiv in einem Kommissioniersystem großer Kommissionierleistung betrieben und unterschiedlichen lokalen Bedingungen mit einfachen Mitteln angepaßt werden kann. Aufgabe der Erfindung ist ferner die Schaffung eines vorgenannten Zentralbandautomaten selbst.

Gelöst wird die der Erfindung zugrundeliegende Aufgabe durch ein Verfahren gemäß Anspruch 1, vorteilhaft weitergebildet durch die Merkmale der Ansprüche 2 bis 10, und durch einen Zentralautomaten gemäß Anspruch 11, vorteilhaft weitergebildet durch die Merkmale der Ansprüche 11 bis 18.

Hierbei können für einen besonders schnellen Befüllungsvorgang bevorzugt das obere und das untere Zentralband den Auftragsbehälters am einzigen Befüllpunkt gleichzeitig oder in unmittelbarer Abfolge mit Kommissioniergut befüllen.

Insbesondere wird vom vorderen Längsende des oberen Zentralbandes Kommissioniergut in den oberen Eingang des Vertikalförderers ausgeworfen, im Vertikalförderer abwärts gefördert und beim unteren Ausgang des Vertikalförderers auf das untere Zentralband oder in einen positionierten Auftragsbehälter ausgeworfen.

Das Abwärtsfördern des Kommissionierguts durch den Vertikalförderer erfolgt zweckmäßigerweise unter Ausnutzung der Schwerkraft des Kommissionierguts durch getaktetes Öffnen und Schließen von stationären Schalen.

Auf dem unteren Zentralband können bevorzugt großdimensionierte und/oder schwergewichtige und/oder häufig kommissionierte Kommissionsgüter und auf dem oberen Zentralband kleindimensionierte und/oder leichtgewichtige und/oder selten kommissionierte Kommissionsgüter kommissioniert werden.

Ein nach vorstehend beschriebenem Verfahren betriebener Zentralbandautomat sieht erfindungsgemäß zumindest zwei vertikal übereinander angeordnete Zentralbänder unter direkter Zwischenschaltung zumindest eines ausschließlich vertikal nach unten förderbaren stationären speziellen kompakten Vertikalförderers vor, der aufgrund der Schwerkraftausnutzung des geförderten Kommissionierguts keine Förderenergie benötigt, wobei die Gesamtanordnung so getroffen ist, daß nur ein einziger Befüllpunkt vorhanden ist, an dem ein Auftragsbehälter für einen kompletten Kommissionierauftrag für viele unterschiedliche Produkte bzw. Kommissioniergüter positioniert wird.

Es kann für eine größere Anzahl unterschiedlicher Kommissioniergüter über dem oberen Zentralband zumindest noch ein weiteres oberes Zentralband vorgesehen sein, welches an seinem vorderen Längsende über einen weiteren Vertikalförderer der vorgenannten Art an den vertikal ausgerichteten Vertikalförderer oder das obere Zentralband angeschlossen ist.

Gleichwohl kann jedes einzelne Zentralband allein für kleinere Kommissionieraufträge vorgesehen sein.

Die Schalen des Vertikalförderers sind zweckmäßigerweise Baumodule, wobei die Zahl der Baumodule durch die vertikale Förderhöhe bzw. den zu überbrückenden Höhenunterschied zwischen den Zentralbändern bestimmt ist.

Die Baumodule können für eine einfache Montage gegebenenfalls vertikal zusammengesteckt werden.

Die Erfindung schafft mithin eine Kombination zweier oder mehrerer Zentralbänder übereinander mittels vertikaler Übergabestelle(n), wobei die Zentralbänder so kombiniert sind, daß nur ein Befüllpunkt benötigt wird und damit die Kombination von einem einzigen Steuerungssystem gesteuert werden kann. Die übereinander montierten Zentralbänder besitzen eine vertikale Übergabestelle in Form eines speziellen Vertikalförderers, welcher grundsätzlich am vorderen Ende des oberen Zentralbandes angeordnet ist und an jeder Stelle des unteren Zentralbandes münden kann. Typischerweise mündet die Übergabestelle am vorderen oder hinteren Ende des unteren Zentralbandes. Zum vorderen Ende des unteren Zentralbandes gehört auch der einzige Befüllpunkt. Auch kann die vertikale Übergabestelle direkt in den Befüllpunkt münden.

Die Zentralbänder arbeiten durch eine Gleichlaufregelung immer mit derselben Geschwindigkeit. Die vertikale Übergabe wird so betrieben; daß jeder Auftrag eine konstante Durchlaufzeit besitzt, wodurch sich eine fixe Verschiebung der Zentralbandfenster oben und unten ergibt. Geschwindigkeitsänderungen an den Zentralbändern beeinflussen auch die Geschwindigkeit der vertikalen Übergabe.

Vorteil der Erfindung ist, daß aufgrund der vertikalen Übereinanderanordnung der Zentralbänder wenig Bauraum und insbesondere eine kleine Bodenfläche benötigt wird, und gleichwohl in der Summe eine große Länge an Zentralbändern für die Kommissionierung vieler unterschiedlicher Produkte eingerichtet werden kann. Der spezielle Vertikalförderer ist in der Gesamtanordnung so integriert, daß er keinen nennenswerten zusätzlichen Bauraum benötigt. Es ist nur eine Steuerung notwendig, da es sich bei der übergeordneten Steuerung um einen einzigen Zentralbandautomaten handelt. Der vertikale Abstand der Zentralbänder ist nicht beschränkt, da die Mechanik der vertikalen Übergabe durch Baumodule beliebig skalierbar bzw. erweiterbar ist.

Durch die relativ kurze "Förderzeit" der vertikalen Übergabe ist die Verschiebung der Zentralbandfenster geringer als mit vergleichbaren Fördertechniklösungen. Dadurch braucht man weniger Pufferstrecke zwischen Anmeldelesung und Befüllpunkt.

Die Erfindung wird nachfolgend anhand von Ausführungsbeispielen unter Bezugnahme auf die beigefügten Zeichnungen näher beschrieben; es zeigen:
- Figur 1: schematisch einen erfindungsgemäßen Zentralbandauto- maten mit zwei übereinander angeordneten Zentralbän- dern und einem zwischengeordneten Vertikalförderer, wobei das obere Zentralband über den Vertikalförderer direkt an den Befüllpunkt bzw. Auftragsbehälter ange- schlossen ist,
- Figur 2: einen zweiten Zentralbandautomaten ähnlich Figur 1, wobei bei das obere Zentralband über den Vertikalför- derer an das hintere Längsende des unteren Zentral- bandes angeschlossen ist,
- Figur 3: einen dritten Zentralbandautomaten ähnlich Figur 2, wobei das obere Zentralband über den Vertikalförderer an den mittleren Bereich des unteren Zentralbandes angeschlossen ist,
- Figuren 4 und 5: die Einzelheit einer nach unten öffenbaren Schale bei einem Vertikalförderer in aufgebrochenen perspektivischen Ansichten einmal geschlossen und einmal offen, und
- Figuren 6 und 7: eine anders ausgebildete Schale ähnlich den Ansichten nach den Figuren 4 und 5.

Gemäß den Zeichnungen umfaßt ein Zentralbandautomat zum Befüllen eines Auftragsbehälters 3 zwei umlaufende Zentralbänder 1, 2, welche parallel zueinander in einem vertikalen Abstand exakt übereinander in einem hier nicht näher interessierenden Kommissioniersystem horizontal angeordnet sind. Die Zentralbänder 1, 2 können gleich oder unterschiedlich lang ausgebildet sein.

Die beiden Zentralbänder 1, 2 besitzen einen einzigen Befüllpunkt P am vorderen Längsende V des unteren Zentralbandes 2 für ein Befüllen eines dort positionierten Auftragsbehälters 3 mit kommissionierten Kommissioniergütern aus (nicht dargestellten) Kommissionierregalen, welche sich längs der Zentralbänder 1, 2 seitlich erstrecken und mittels Querauswerfern kommissioniertes Kommissioniergut auf das obere und auf das untere Zentralband 1, 2 in ausgewählten Bereichen oder sogenannten allocierten virtuellen Fenstern F1, F2 eines bestimmten Kommissionierauftrags auswerfen.

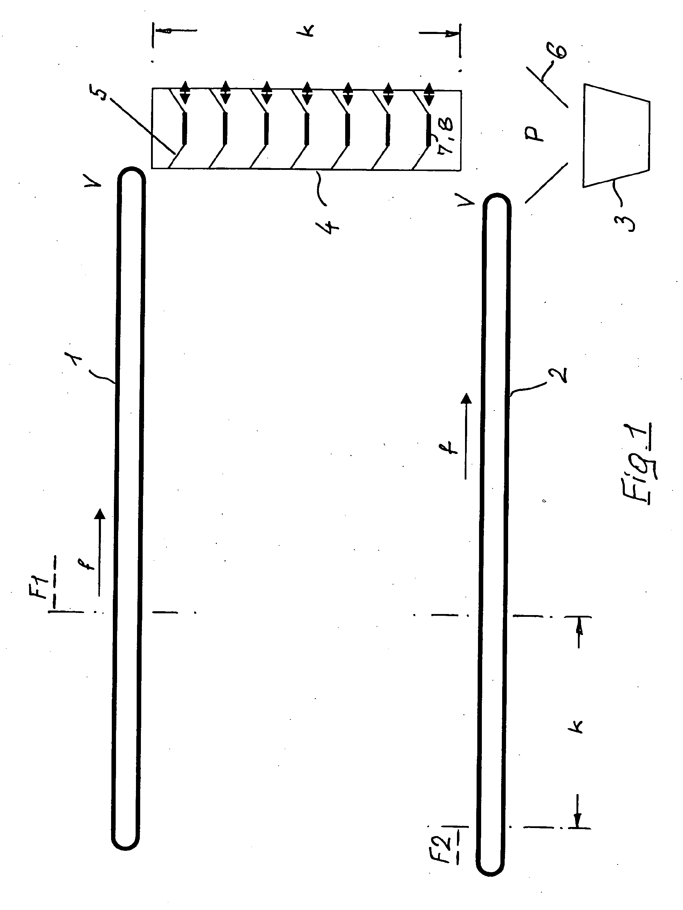

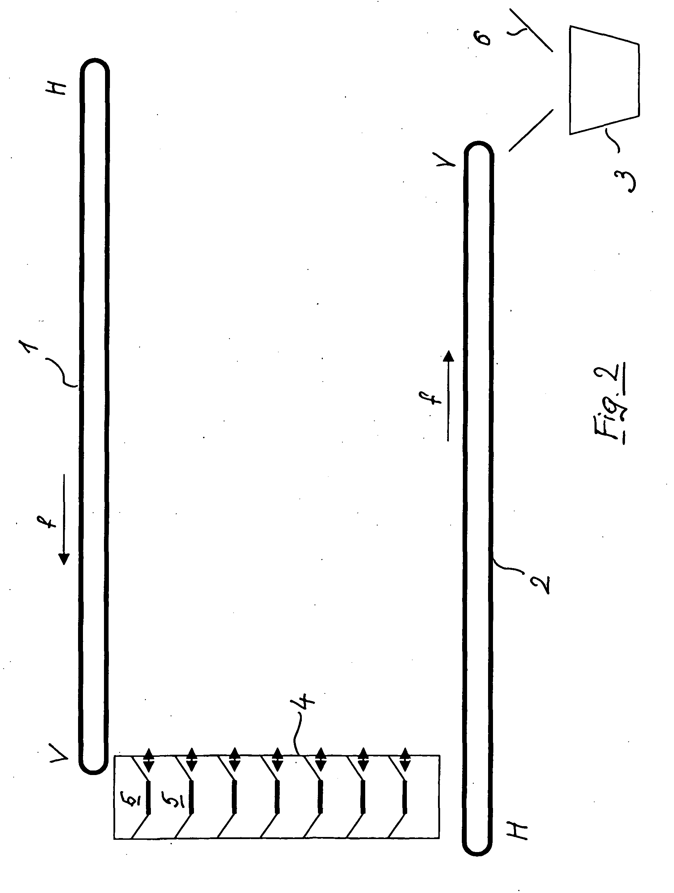

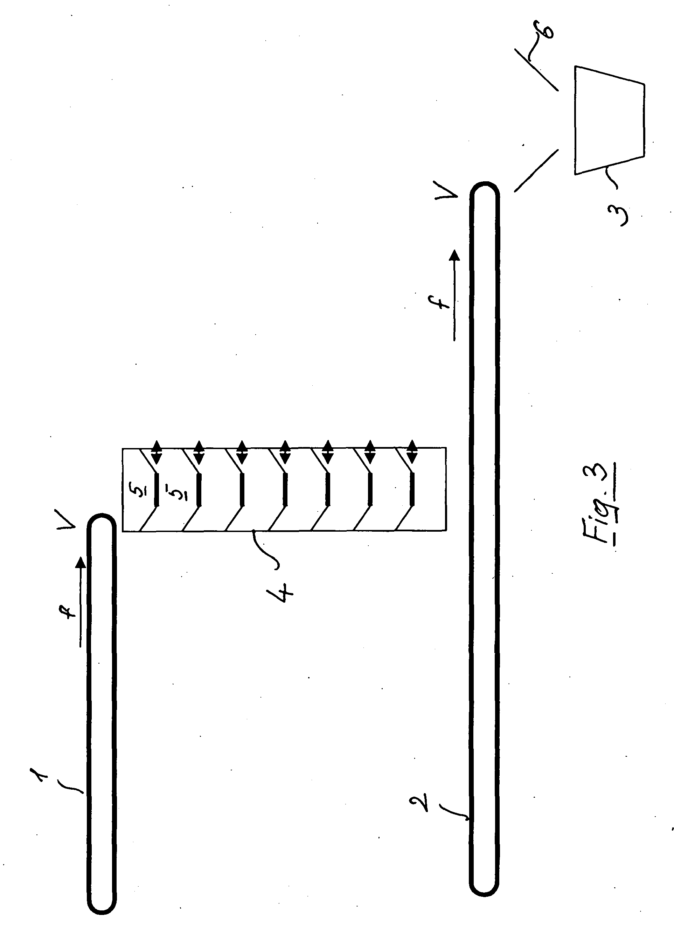

Am vorderen Längsende V des oberen Zentralbands 1 befindet sich der Eingang eines stationären Vertikalförderers 4 mit stationären nach unten öffenbaren Schalen 5 in Modulbauweise, welcher durch getaktetes Öffnen und Schließen der Schalen 5 Kommissioniergut des oberen Zentralbands 1 nach unten in einer ersten Ausführungsvariante der Erfindung nach Figur 1 direkt dem Befüllpunkt P zuführt oder in weiteren Ausführungsvarianten nach den Figuren 2 und 3, dem unteren Zentralband 2 entweder beim hinteren Längsende H oder in einem mittleren Bereich M des unteren Zentralbands 2 diesem Zentralband 2 übergibt, insbesondere auswirft, von wo die Kommissioniergüter des oberen Zentralbands 1 zusammen mit den Kommissioniergütern des unteren Zentralbands 2 in Richtung des gemeinsamen Befüllpunkts P zum Auftragsbehälter 3 gefördert und am vorderen Längsende des unteren Zentralbands 2 in den Auftragsbehälter 3 ausgeworfen werden.

Das Abwärtsfördern des Kommissionierguts durch den Vertikalförderer 4 erfolgt unter Ausnutzung der Schwerkraft des Kommissionierguts durch getaktetes abwechselndes Öffnen und Schließen von aufeinanderfolgenden Schalen 5, wobei das Kommissioniergut bevorzugt immer in die nächst untere Schale fällt. Hierbei können auch einzelne Schalen fortwährend geöffnet bleiben, um eine höhere Fallhöhe des Kommissionierguts und mithin ein schnelleres Durchtakten einzurichten, sofern dies das Kommissioniergut verträgt und im individuellen Einzelfall erwünscht ist.

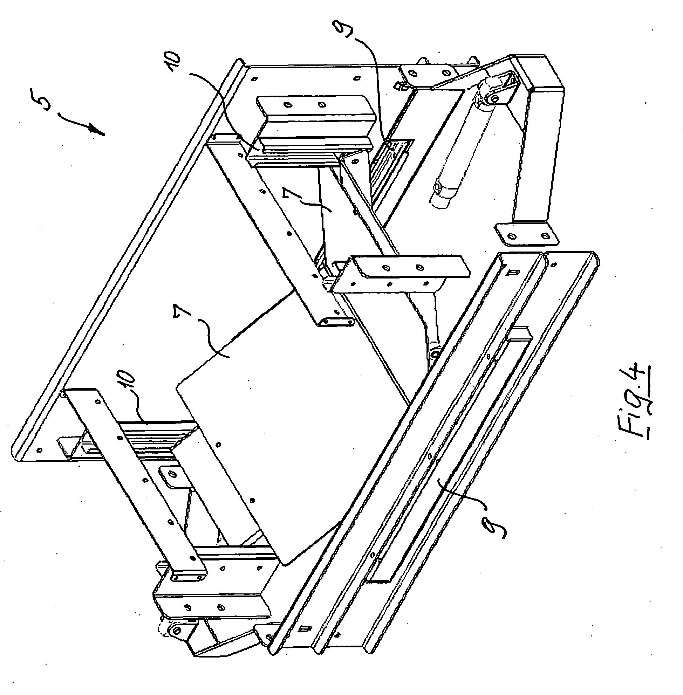

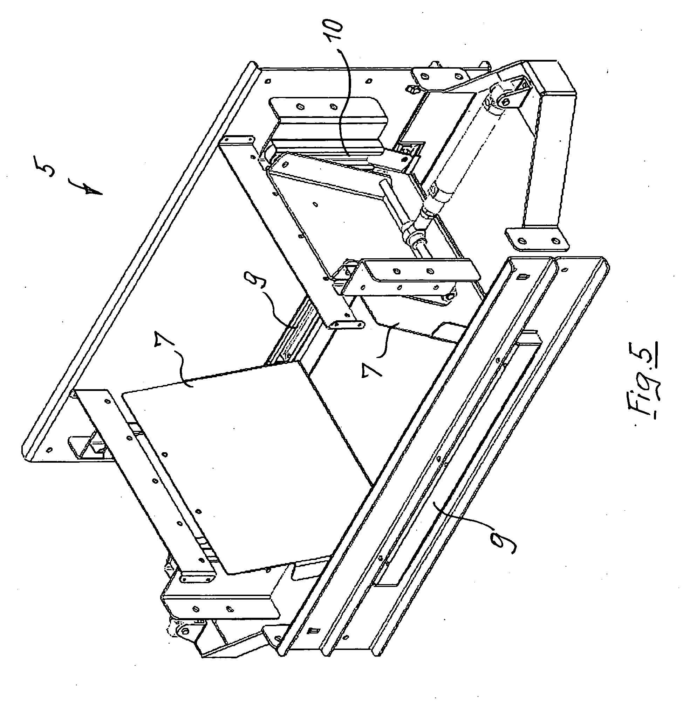

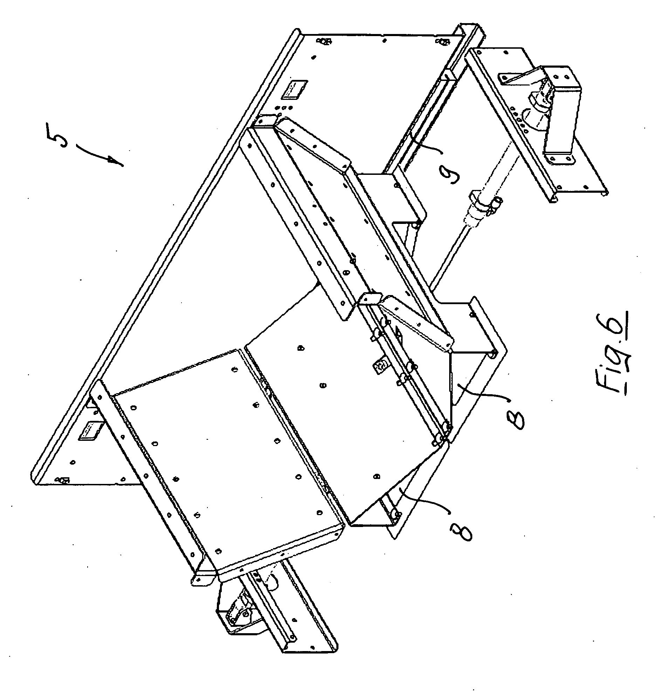

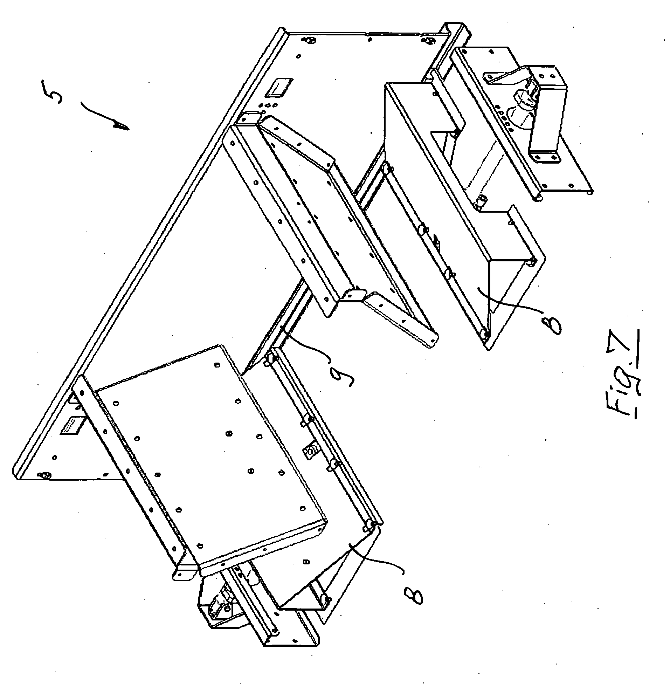

Die nach unten öffenbaren Schalen 5 besitzen in einer Ausführungsvariante nach den Figuren 4 und 5 zwei aufeinander zuweisende bodenseitig öffenbare Stell-Klappwände 7 oder in einer anderen Ausführungsvariante nach den Figuren 6 und 7 zwei aufeinander zuweisende bodenseitig öffenbare keilförmige Horizontal-Schieber 8 als Öffnungsmaul, wobei die beiden Stell-Klappwände 7 oder die beiden Horizontal-Schieber 8 im Bereich des bodenseitigen Öffnungsmauls der Schale 5 in horizontalen Führungsschienen 9 seitlich geführt sind. Die beiden Stell-Klappwände 7 nach den Figuren 4 und 5 besitzen zusätzlich vertikale Führungsschienen 10 am anderen Ende, welches dem in den horizontalen Führungsschienen 9 geführten Ende der Stell-Klappwände abgewandt ist.

Auf dem unteren Zentralband 2 werden bevorzugt großdimensionierte und/oder schwergewichtige und/oder häufig kommissionierte Kommissionsgüter und auf dem oberen Zentralband 1 kleindimensionierte und/oder leichtgewichtige und/oder selten kommissionierte Kommissionsgüter kommissioniert.

Entsprechend der Durchlaufzeit k des Kommissionierguts durch den Vertikalförderer 4 werden dem oberen und dem unteren Zentralband 1, 2 zeitlich versetzte virtuelle Fenster F1, F2 eines Kommissionierauftrags zugeteilt bzw. allociert.

Der Zentralrechner des Zentralbandautomaten weist eine Steuerungseinrichtung auf, welche nach Anmeldelesung des Kommissionierauftrags nicht nur die Beschickung/Kommissionierung der Kommissioniergüter auf die Zentralbänder 1, 2 veranlaßt, sondern auch die Zentralbänder 1, 2 und den Vertikalförderer 4 sowie die Bereitstellung und den Abtransport der Auftragsbehälter 3 steuert.

Die Steuerungseinrichtung ist so eingestellt, daß im Betrieb bevorzugt eine konstante Fördergeschwindigkeit f der Zentralbänder 1, 2 einrichtet ist.

Die Steuerungseinrichtung besorgt auch in einem bevorzugten Betrieb eine konstante Durchlaufgeschwindigkeit k des Vertikalförderers 4, welche bevorzugt der zeitlichen Versetzung der beiden Fenster F1, F2 in Figur 1 entspricht.

Insbesondere ist die Steuerungseinrichtung so eingestellt, daß am Ort des einzigen Befüllpunkts P eine zeitgleiche Übergabe des Kommissionierguts oder zeitlich unmittelbar aufeinanderfolgende Übergabe des Kommissionierguts von den Zentralbändern 1, 2 an den Auftragsbehälter 3 eingerichtet ist. Auf diese Weise wird ein schneller Füllvorgang des Auftragsbehälters sogar bei vielen unterschiedlichen Produkten bzw. Kommissioniergütern eingerichtet, welche primär in das obere und das untere Zentralband kommissioniert worden sind und von dort in den Auftragsbehälter 3 gelangen.

Die Steuerungseinrichtung kann gegebenenfalls auch so eingestellt sein, daß eine Pufferung oder Zwischenspeicherung im Vertikalförderer 4 eingerichtet ist, sofern dies der Einzelfall oder eine Störung des Systems verlangt.

Für ein zuverlässigeres Befüllen des Auftragsbehälters 3 kann dem einzigen Befüllpunkt P des Auftragsbehälters 3 ein Fülltrichter 6 vorgeordnet sein.

Die Schalen 5 des Vertikalförderers 4 sind gleich aufgebaute Baumodule, wobei die Zahl der Baumodule durch die vertikale Förderhöhe bzw. den zu überbrückenden Höhenunterschied zwischen den Zentralbändern 1, 2 bestimmt ist. Die Baumodule können vertikal zusammengesteckt werden.

Der Zentralbandautomat kann über dem oberen Zentralband 1 zumindest noch ein weiteres oberes Zentralband besitzen, welches an seinem vorderen Längsende über einen weiteren Vertikalförderer der vorgenannten Art an den vertikal ausgerichteten Vertikalförderer 4 oder an das obere.Zentralband 2 angeschlossen ist.

So kann beispielsweise eine zusammengesetzte Anordnung eines Zentralbandautomaten bestehend aus den Ausführungsvarianten der Figuren 1 und 3 vorgesehen sein.

Jedes einzelne Zentralband 1 bzw. 2 kann allein für kleinere Kommissionieraufträge verwendet werden.

Nachfolgend wird ein Kommissioniervorgang bei einem Zentralbandautomaten nach Figur 1 im einzelnen beschrieben, insbesondere das Befüllen eines Auftragsbehälters 3.

Beide Zentralbänder 1, 2 mit der Fördergeschwindigkeit f fahren gleich schnell.

Es werden nur die Fenster F1, F2 für einen bestimmten Kommissionierauftrag exemplarisch betrachtet. Vor und nach den beschriebenen Fenstern F1, F2 befinden sich weitere Fenster, nämlich die Fenster anderer Kommissionieraufträge. Vor und hinter dem beschriebenen im Befüllpunkt P positionierten Auftragsbehälter 3 befinden sich weitere Behälter, die diesen anderen Kommissionieraufträgen zugeordnet sind.

Die vertikale Übergabe bzw. der Vertikalförderer 4 benötigt eine konstante Zeit k zum Durchtakten der Produkte bzw. Kommissioniergüter, welche der zeitlichen Versetzung der Fenster F1, F2 entspricht.

In der beschriebenen Übergabestelle ist für eine vereinfachte Beschreibung keine Produktpufferung vorgesehen. Es gibt sehr wohl Übergabestellen, in denen eine Pufferung erfolgt.

Im Betrieb passiert ein Auftragsbehälter 3 die Anmeldelesung für den Zentralbandautomaten. Zu diesem Zeitpunkt wird die notwendige Länge der individuellen Auftragsfenster F1, F2 berechnet.

Die Fenster F1, F2 werden an die bereits allocierten Fenster der Zentralbänder 1, 2 angereiht. Sollten keine Fenster die Zentralbänder bereits belegen, so wird das virtuelle Fenster F1 an das hintere Ende H des oberen Zentralbandes 1 gelegt. Das Fenster F2 für das untere Zentralband 2 liegt dann außerhalb des unteren Zentralbandes 2, sozusagen hinter der Umlenkung des unteren Zentralbandes 2.

Das Fenster F1 fährt nun auf dem oberen Zentralband 1 nach vorne. Nach k Sekunden (k = Verschiebung durch die Übergabe) kommt das Fenster F2 für den unteren Teil in den Bereich des unteren Zentralbandes 2.

Die Auswerfer an den Seiten des Zentralbands 1 bzw. 2 werfen die benötigten Produkte in das vorbeifahrende Zentralbandfenster F1 bzw. F2.

Ist das Fenster F1 am oberen Zentralband 1 komplett abgefahren und sind mithin alle zugehörigen Produkte in der vertikalen Übergabe bzw. im Vertikalförderer 4, so werden diese weiter nach unten getaktet. Das Fenster F2 am unteren Zentralband 2 fährt während dieser Zeit weiter nach vorne.

Der Auftragsbehälter 4 befindet sich zum Zeitpunkt, an dem das Fenster F2 des unteren Zentralbandes 2 an der Übergabestelle ankommt, bereits in der Übergabestelle. Sollte das nicht der Fall sein, so werden beide Zentralbänder 1, 2 und die vertikale Übergabe bzw. der Vertikalförderer.4 so lange angehalten, bis der Auftragsbehälter 4 beim Befüllpunkt P angekommen ist.

Die Produkte im Fenster F2 des unteren Zentralbandes 2 fallen beim einzigen Befüllpunkt P in den Auftragsbehälter 3.

Gleichzeitig öffnet sich der unterste Schieber der Schale 5 des Vertikalförderers 4, und es fallen die Produkte des oberen Zentralbands 1 auch in den Auftragsbehälter 3.

Nach dem Befüllen verläßt der Auftragsbehälter 3 den Befüllpunkt P. Der nächste Auftragsbehälter fährt ein und übernimmt die Produkte aus den nachfolgenden Zentralbandfenstern.

## Patentansprüche

1. Verfahren zum Befüllen eines Auftragsbehälters in einem Zentralbandautomaten mit einem Zentralband, welches längs eines virtuellen Fensters eines Kommissionierauftrags mit Kommissioniergut bestückt wird, und das Kommissioniergut an einem Befüllpunkt am vorderen Längsende (V) des Zentralbandes dem Auftragsbehälter abgegeben
wird,
wobei zumindest zwei vertikal übereinander angeordnete Zentralbänder (1, 2) des Zentralbandautomaten den Auftragsbehälter (3) an einem einzigen Befüllpunkt (P) des unteren Zentralbandes (2) für einen Kommissionierauftrag befüllen,
**dadurch gekennzeichnet, dass** das obere Zentralband (1) den Auftragsbehälter (3) mittels zumindest eines zwischengeordneten Vertikalförderers (4) an dem Befüllpunkt (P) befüllt.

2. Verfahren nach Anspruch 1,
**dadurch gekennzeichnet,**
**daß** das obere und das untere Zentralband (1, 2) den Auftragsbehälters (3) am einzigen Befüllpunkt (P) gleichzeitig oder in unmittelbarer Abfolge mit Kommissioniergut befüllen.

3. Verfahren nach Anspruch 1 oder 2,
**dadurch gekennzeichnet,**
**daß** vom vorderen Längsende (V) des oberen Zentralbandes (1) Kommissioniergut in den oberen Eingang des Vertikalförderers (4) ausgeworfen, im Vertikalförderer abwärts gefördert und beim unteren Ausgang des Vertikalförderers auf das untere Zentralband (2) oder in einen positionierten Auftragsbehälter (3) ausgeworfen wird.

4. Verfahren nach einem der Ansprüche 1 bis 3,
**dadurch gekennzeichnet,**
**daß** das Abwärtsfördern des Kommissionierguts durch den Vertikalförderer (4) unter Ausnutzung der Schwerkraft des Kommissionierguts durch getaktetes Öffnen und Schließen von stationären Schalen (5) erfolgt.

5. Verfahren nach einem der Ansprüche 1 bis 4,
**dadurch gekennzeichnet,**
**daß** das im Vertikalförderer (4) geförderte Kommissioniergut im Bereich des hinteren Längsendes (H) des unteren Zentralbands (2) auf das untere Zentralband (2) abgegeben, insbesondere ausgeworfen wird.

6. Verfahren nach einem der Ansprüche 1 bis 4,
**dadurch gekennzeichnet,**
**daß** das im Vertikalförderer (4) geförderte Kommissioniergut längs eines mittleren Abschnitts (M) des unteren Zentralbands (2) auf das untere Zentralband (2) abgegeben, insbesondere ausgeworfen wird.

7. Verfahren nach einem der Ansprüche 1 bis 6,
**dadurch gekennzeichnet,**
**daß** auf dem unteren Zentralband (2) großdimensionierte und/oder schwergewichtige und/oder häufig kommissionierte Kommissionsgüter und auf dem oberen Zentralband (1) kleindimensionierte und/oder leichtgewichtige und/oder selten kommissionierte Kommissionsgüter kommissioniert werden.

8. Verfahren nach einem der Ansprüche 2 bis 7,
**dadurch gekennzeichnet,**
**daß** entsprechend der Durchlaufzeit (k) des Kommissionierguts durch den Vertikalförderer (4) dem oberen und dem unteren Zentralband (1, 2) zeitlich versetzte virtuelle Fenster (F1, F2) eines Kommissionierauftrags zugeteilt werden.

9. Verfahren nach einem der Ansprüche 1 bis 8,
**dadurch gekennzeichnet,**
**daß** der Vertikalförderer (4) mit konstanter Durchlaufzeit (k) betrieben wird.

10. Verfahren nach einem der Ansprüche 1 bis 9,
**dadurch gekennzeichnet,**
**daß** oberes und unteres Zentralband (1, 2) mit gleicher Fördergeschwindigkeit (f) betrieben werden.

11. Zentralbandautomat mit Zentralband zum Befüllen eines Auftragsbehälters, wobei
zwei vertikal übereinander angeordnete Zentralbänder, (1, 2) vorgesehen sind, welche einen einzigen Befüllpunkt (P) am vorderen Längsende (V) des unteren Zentralbandes (2) besitzen, **dadurch gekennzeichnet, daß** am vorderen Längsende (V) des oberen Zentralbandes (1) ein Vertikalförderer (4) mit stationären nach unten öffenbaren Schalen (5) angeschlossen ist, welcher durch getaktetes Öffnen und Schließen der Schalen (5) Kommissioniergut nach unten direkt dem Befüllpunkt (P) zuführt oder dem unteren Zentralband (2) übergibt, so dass der Auftragbehälter (3) nach einem der Ansprüche 1 bis 10 befüllt wind.

12. Zentralbandautomat nach Anspruch 11,
**dadurch gekennzeichnet,**
**daß** der Zentralrechner des Zentralbandautomaten eine Steuerungseinrichtung aufweist, welche nach Anmeldelesung des Kommissionierauftrags nicht nur die Beschickung/Kommissionierung der Kommissioniergüter auf die Zentralbänder (1, 2) veranlaßt, sondern auch die Zentralbänder (1, 2) und Vertikalförderer (4) sowie die Bereitstellung und den Abtransport der Auftragsbehälter (3) steuert.

13. Zentralbandautomat nach Anspruch 12,
**dadurch gekennzeichnet,**
**daß** die Steuerungseinrichtung eine Pufferung im Vertikalförderer (4) besorgt.

14. Zentralbandautomat nach einem der Ansprüche 11 bis 13,
**dadurch gekennzeichnet,**
**daß** über dem oberen Zentralband (1) zumindest ein weiteres oberes Zentralband vorgesehen ist, welches an seinem vorderen Längsende über einen weiteren Vertikalförderer der vorgenannten Art an den vertikal ausgerichteten Vertikalförderer (4) oder das obere Zentralband (2) angeschlossen ist.

15. Zentralbandautomat nach einem der Ansprüche 11 bis 14,
**dadurch gekennzeichnet,**
**daß** jedes einzelne Zentralband (1 bzw. 2) allein für kleinere Kommissionieraufträge vorgesehen ist.

16. Zentralbandautomat nach einem der Ansprüche 11 bis 15,
**dadurch gekennzeichnet,**
**daß** die Schalen (5) des Vertikalförderers (4) Baumodule sind, wobei die Zahl der Baumodule durch die vertikale Förderhöhe bzw. den zu überbrückenden Höhenunterschied zwischen den Zentralbändern (1, 2) bestimmt ist, und gegebenenfalls die Baumodule vertikal zusammensteckbar sind.

17. Zentralbandautomat nach einem der Ansprüche 11 bis 16,
**dadurch gekennzeichnet,**
**daß** dem einzigen Befüllpunkt (P) des Auftragsbehälters (3) ein Fülltrichter (6) vorgeordnet ist.

18. Zentralbandautomat nach einem der Ansprüche 11 bis 17,
**dadurch gekennzeichnet,**
**daß** die nach unten öffenbaren Schalen (5) zwei aufeinander zu weisende bodenseitig öffenbare Stell-Klappwände (7) oder zwei aufeinander zu weisende bodenseitig öffenbare Horizontal-Schieber (8) als Öffnungsmaul aufweist, wobei die beiden Stell-Klappwände oder die beiden Horizontal-Schieber im Bereich des bodenseitigen Öffnungsmauls der Schale in horizontalen Führungsschienen (9) seitlich geführt sind.

## Claims

1. Process for filling an order container in a central belt automatic unit with a central belt, which is provided with commissioning goods along a virtual window of a commissioning order, and the commissioning goods are released at a filling point at the said front longitudinal end (V) of the central belt onto the order container, wherein at least two said central belts (1, 2) of the said central belt automatic unit, which said central belts are arranged vertically one on top of another, fill the said order container (3) for a commissioning order at a said single filling point (P) of the said lower central belt (2).
**characterized in that**
the said upper central belt (1) fills the said order container (3) at the said single filling point (P) by means of at least one said vertical conveyor (4) arranged between them.

2. Process in accordance with claim 1,
**characterized in that**
the said upper and lower central belts (1, 2) fill the said order container (3) with commissioning goods at the said single filling point (P) simultaneously or in a direct sequence.

3. Process in accordance with claim 1 or 2,
**characterized in that**
commissioning goods are ejected from the said front longitudinal end (V) of the said upper central belt (1) into the upper inlet of the said vertical conveyor (4), conveyed downwards in the vertical conveyor, and ejected at the lower outlet of the said vertical conveyor onto the said lower central belt (2) or into a said positioned order container (3).

4. Process in accordance with one of the claims 1 through 3,
**characterized in that**
the downward conveying of the commissioning goods by the said vertical conveyor (4) takes place with the utilization of the force of gravity of the said commissioning goods by cycled opening and closing of said stationary trays (5).

5. Process in accordance with one of the claims 1 through 4,
**characterized in that**
the commissioning goods being conveyed in the said vertical conveyor (4) are released, especially ejected, onto the said lower central belt (2) in the area of the said rear longitudinal end (H) of the said lower central belt (2).

6. Process in accordance with one of the claims 1 through 4,
**characterized in that**
the commissioning goods being conveyed in the said vertical conveyor (4) are released, especially ejected, along a said middle section (M) of the said lower central belt (2).

7. Process in accordance with one of the claims 1 through 6,
**characterized in that**
large-sized and/or heavy and/or frequently commissioned commissioning goods are commissioned on the said lower central belt (2) and small-sized and/or lightweight and/or rarely commissioned commissioning goods are commissioned on the said upper central belt (1).

8. Process in accordance with one of the claims 2 through 7,
**characterized in that**
corresponding to the said transit time (k) of the commissioning goods through the said vertical conveyor (4), said virtual windows (F1, F2) of a commissioning order, which are offset in time, are assigned to the said upper and lower central belts (1, 2).

9. Process in accordance with one of the claims 1 through 8,
**characterized in that**
the said vertical conveyor (4) is operated with a constant transit time (k).

10. Process in accordance with one of the claims 1 through 9,
**characterized in that**
the said upper and lower central belts (1, 2) are operated at equal conveying velocity (f).

11. Central belt automatic unit with central belt for filling an order container, wherein two said central belts (1, 2) which are arranged vertically one on top of another, have a said single filling point (P) at the said front longitudinal end (V) of the said lower central belt (2),
**characterized in that**
a said vertical conveyor (4) with said stationary trays (5), which can be opened downwardly, and which said vertical conveyor (4) feeds commissioning goods downwardly directly to the said filling point (P) or transfers same to the said lower central belt (2) by cycled opening and closing of the said trays (5), is connected at the said front longitudinal end (V) of the said upper central belt (1), for filling an order container in accordance with one of the claims 1 through 10,

12. Central belt automatic unit in accordance with claim 11,
**characterized in that**
the said central computer of the said central belt automatic unit has a control means, which not only initiates the loading/commissioning of the commissioning goods onto the said central belts (1, 2) after reading of the log-on, but also controls the said central belts (1, 2) and the said vertical conveyor (4) as well as the readying and removal of the said order containers (3).

13. Central belt automatic unit in accordance with claim 12,
**characterized in that**
the said control means ensures buffering in the said vertical conveyor (4).

14. Central belt automatic unit in accordance with one of the claims 11 through 13,
**characterized in that**
at least one additional upper central belt, which is connected at its front longitudinal end via another vertical conveyor of the above-mentioned type to the said vertically directed vertical conveyor (4) or to the said upper central belt (2), is provided above the said upper central belt (1).

15. Central belt automatic unit in accordance with one of the claims 11 through 14,
**characterized in that**
each individual said central belt (1 and 2, respectively) is provided alone for small commissioning orders.

16. Central belt automatic unit in accordance with one of the claims 11 through 15,
**characterized in that**
the said trays (5) of the said vertical conveyor (4) are basic modules, the number of basic modules being determined by the vertical conveying height or the height difference to be bridged over between the said central belts (1, 2), and optionally, the basic modules can be put together vertically.

17. Central belt automatic unit in accordance with one of the claims 11 through 16,
**characterized in that**
a said filling hopper (6) is arranged upstream of the said individual filling point (P) of the said order container (3).

18. Central belt automatic unit in accordance with one of the claims 11 through 17,
**characterized in that**
the said trays (5), which can be opened downwardly, have two said adjustable flap walls (7), which face each other and can be opened on the bottom side, or have two said horizontal slides (8), which face each other and can be opened on the bottom side, as an opening mouth, wherein the said two adjustable flap walls or the said two horizontal slides are guided on the side in said horizontal guide rails (9) in the area of the bottom-side opening mouth of the said tray.

## Revendications

1. Procédé de remplissage d'un récipient de transport dans un automate à bande centrale pourvu d'une bande centrale recevant, le long d'une fenêtre virtuelle, une commande de marchandise à expédier et la marchandise à expédier étant amenée au récipient de transport au niveau d'un point de remplissage situé à l'extrémité longitudinale avant (V) de la bande centrale, au moins deux bandes centrales (1, 2) disposées l'une sur l'autre dans le plan vertical de l'automate à bande centrale remplissant le récipient de transport (3) au niveau d'un point de remplissage (P) unique de la bande centrale inférieure (2) pour une commande donnée,
**caractérisé en ce que**
la bande centrale supérieure (1) remplit le récipient de transport (3) au niveau du point de remplissage (P) à l'aide d'au moins un transporteur vertical (4) intercalé.

2. Procédé selon la revendication 1,
**caractérisé en ce que**
les bandes centrales supérieure et inférieure (1, 2) remplissent en même temps ou directement à la suite l'une de l'autre le récipient de transport (3) avec les marchandises à expédier au niveau d'un point de remplissage (P) unique.

3. Procédé selon la revendication 1 ou 2,
**caractérisé en ce que**
depuis l'extrémité longitudinale avant (V) de la bande centrale supérieure (1), la marchandise à expédier est jetée à l'entrée du transporteur vertical (4), puis transportée vers le bas dans le transporteur vertical et, à partir du début du transporteur vertical, éjecté sur la bande centrale inférieure (2) ou dans un récipient de transport (3) positionné à cet endroit.

4. Procédé selon l'une quelconque des revendications 1 à 3,
**caractérisé en ce que**
le transport vers le bas de la marchandise à expédier à travers le transporteur vertical (4) se produit à l'aide de la force de gravité de la marchandise à expédier par le biais d'une ouverture et d'une fermeture cadencées de coques (5) stationnaires.

5. Procédé selon l'une quelconque des revendications 1 à 4,
**caractérisé en ce que**
la marchandise à expédier transportée dans le transporteur vertical (4) est déposée dans la zone de l'extrémité longitudinale arrière (H) de la bande centrale inférieure (2), sur la bande centrale inférieure (2), notamment jetée.

6. Procédé selon l'une quelconque des revendications 1 à 4,
**caractérisé en ce que**
la marchandise à expédier transportée dans le transporteur vertical (4) est amenée le long d'un segment central (M) de la bande centrale inférieure (2), sur la bande centrale inférieure (2), notamment jetée.

7. Procédé selon l'une quelconque des revendications 1 à 6,
**caractérisé en ce que**
la bande centrale inférieure (2) transporte des marchandises à expédier de grandes dimensions et/ou lourdes et/ou fréquemment commandées et que la bande centrale supérieure (1) transporte des marchandises à expédier de petites tailles et/ou légères et/ou rarement commandées.

8. Procédé selon l'une quelconque des revendications 2 à 7,
**caractérisé en ce**
**qu'**en fonction du temps de traversée (k) de la marchandise à expédier à travers le transporteur vertical (4), les fenêtres virtuelles (F1, F2) d'une commande sont réparties entre la bande centrale supérieure et inférieure (1, 2) de façon décalée dans le temps.

9. Procédé selon l'une quelconque des revendications 1 à 8,
**caractérisé en ce que**
le transporteur vertical (4) est actionné pour un temps de parcours (k) constant.

10. Procédé selon l'une quelconque des revendications 1 à 9,
**caractérisé en ce que**
les bandes centrales supérieure et inférieure (1, 2) sont actionnées à la même vitesse de transport (f).

11. Automate à bande centrale avec bande centrale de remplissage d'un récipient de transport, deux bandes centrales (1, 2) disposées l'une au-dessus de l'autre dans le plan vertical étant prévues, lesdites bandes possédant un seul point de remplissage (P) au niveau de l'extrémité longitudinale avant (V) de la bande centrale inférieure (2),
**caractérisé en ce**
**qu'**au niveau de l'extrémité longitudinale avant (V) de la bande centrale supérieure (1), un transporteur vertical (4) est raccordé à des coques (5) stationnaires pouvant être ouvertes vers le bas et faisant descendre la marchandise à expédier en ouvrant et en fermant de façon cadencée des coques (5) directement jusqu'au point de remplissage (P) ou à la bande centrale inférieure (2), de sorte que le récipient de transport (3) est rempli selon l'une quelconque des revendications 1 à 10.

12. Automate à bande centrale selon la revendication 11,
**caractérisé en ce que**
l'ordinateur central de l'automate à bande centrale comporte un dispositif de commande qui, après la lecture de la commande, déclenche non seulement l'approvisionnement/la préparation des commandes de marchandises à expédier sur les bandes centrales (1, 2) mais commande aussi les bandes centrales (1, 2) et le transporteur vertical (4) ainsi que la mise en place et l'évacuation du récipient de transport (3).

13. Automate à bande centrale selon la revendication 12,
**caractérisé en ce que**
le dispositif de commande fournit une zone tampon dans le transporteur vertical (4).

14. Automate à bande centrale selon l'une quelconque des revendications 11 à 13,
**caractérisé en ce**
**qu'**au moins une autre bande centrale supérieure est prévue au-dessus de la bande centrale supérieure (1), ladite autre bande étant raccordée au niveau de son extrémité longitudinale avant au transporteur vertical (4) orienté verticalement ou à la bande centrale supérieure (2) via un autre transporteur vertical du type précédemment cité.

15. Automate à bande centrale selon l'une quelconque des revendications 11 à 14,
**caractérisé en ce que**
chaque bande centrale (1 et/ou 2) utilisée seule est prévue pour les petites commandes à expédier.

16. Automate à bande centrale selon l'une quelconque des revendications 11 à 15,
**caractérisé en ce que**
les coques (5) du transporteur vertical (4) sont des modules fonctionnels, le nombre de modules fonctionnels étant déterminé par la hauteur de transport verticale et/ou la différence de hauteur à franchir entre les bandes centrales (1, 2) et **en ce que** le cas échéant les modules fonctionnels peuvent être assemblés verticalement.

17. Automate à bande centrale selon l'une quelconque des revendications 11 à 16,
**caractérisé en ce que**
le seul point de remplissage (P) du récipient de transport (3) est précédé d'une trémie de remplissage (6).

18. Automate à bande centrale selon l'une quelconque des revendications 11 à 17,
**caractérisé en ce que**
les coques (5) pouvant être ouvertes vers le bas comportent deux parois rabattables mobiles (7) orientées l'une vers l'autre pouvant être ouvertes côté fond ou deux coulisseaux horizontaux (8) orientés l'un vers l'autre pouvant être ouverts côté fond prenant la forme d'une gueule d'ouverture, les deux parois rabattables mobiles ou les deux coulisseaux horizontaux étant guidés en côté dans les rails de guidage horizontaux (9), dans la zone de la gueule d'ouverture côté fond de la coque.
